# EUROPEAN PATENT APPLICATION

(11) **EP 0 694 916 A2**
(43) Date of publication of application: **31.01.1996**
(21) Application number: 95111868.6
(22) Date of filing: 27.07.1995
(51) Int. Cl.: G11B 7/26, G11B 23/00

(54) **Method of fabricating stamper**

(30) Priority: 27.07.1994 JP 194677/94; 27.07.1994 JP 194678/94
(71) Applicant: SONY CORPORATION, Tokyo (JP)
(72) Inventor: Mitsui, Norio, Shinagawa-ku, Tokyo (JP); Shimizu, Hidetoshi, Shinagawa-ku, Tokyo (JP); Tsuchitani, Masao, Shinagawa-ku, Tokyo (JP)
(74) Representative: TER MEER - MÜLLER - STEINMEISTER & PARTNER

(57) **Abstract**

In the method for fabricating a stamper for applying a photoresist on with a major surface of a substrate with plate configuration, exposing and developing the photoresist with the pattern corresponding to a signal to be recorded to form a concave/convex pattern composed of the photoresist on the major surface of the substrate and fabricating a stamper serving as a mold at the time of molding an optical disc based on the concave/convex pattern, the substrate itself is processed to be used as a stamper. Further, a positive-acting photoresist is applied on the major surface of the substrate formed to be quite smooth, parts of the photoresist other than parts corresponding to pits and/or grooves of the photoresist is exposed and developed to remain only the parts corresponding to pits and/or grooves of the photoresist, and the major surface of the substrate which exposes through the photoresist is etched to form each of parts of the substrate corresponding to the parts corresponding to the pits and/or grooves of the photoresist in convex configuration, thereby the stamper is formed easily and in a short time.

## Description

### BACKGROUND OF THE INVENTION

### FIELD OF THE INVENTION

The present invention relates to a method for fabricating a stamper, which is suitable for, for example, fabricating a stamper serving as a mold at the time of molding an optical disc.

### DESCRIPTION OF THE RELATED ART

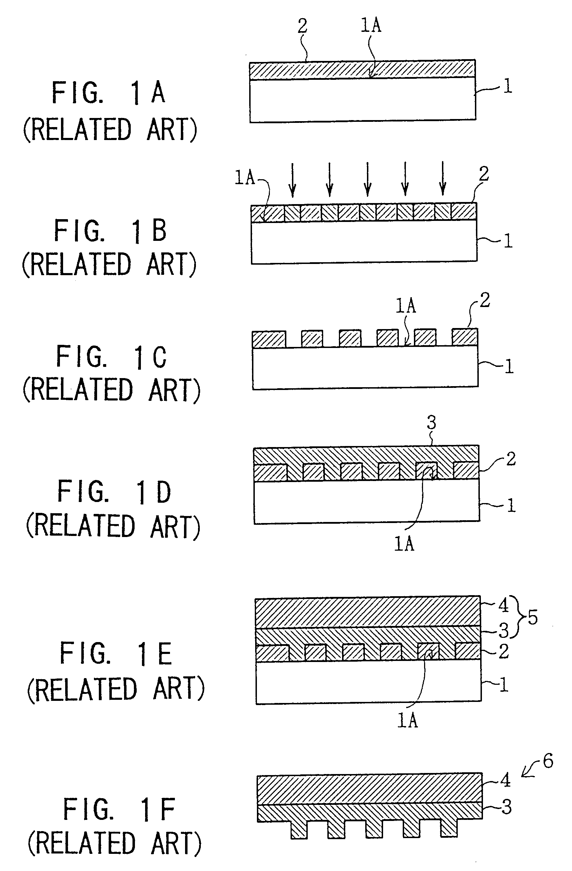

Heretofore, this kind of stampers has been fabricated in accordance with the following processes shown in Figs. 1A to 1F.

First, a positive-acting photoresist 2 is applied on one major surface 1A (hereinafter referred to as a super mirror finished surface) of a glass plate 1 which is polished to be quite smooth (Fig. 1A). Then, the photoresist 2 is exposed with a laser beam hν in order to record a signal thereon (Fig. 1B). Thereafter, the photoresist 2 is developed to thereby form a concave/convex pattern corresponding to the signal recorded on the photoresist 2 on the super mirror finished surface 1A of the glass plate 1 (Fig. 1C).

Then, a conductive film layer 3 is formed on the surface of the concave/convex pattern by sputtering process, chemical plating process or the like (Fig. 1D). A plated layer 4 having a predetermined thickness is formed on the conductive film layer 3 by electroplating process or the like (Fig. 1E), and then a stamper portion 5 composed of the conductive film layer 3 and the plated layer 4 is stripped off from the glass plate. Thereafter, the photoresist 2 etc., adhered to a pit surface of the stamper portion is washed away to obtain a stamper 6 (Fig. 1F).

However, since the conventional method for fabricating a stamper for an optical disc (hereinafter referred to as a first method for fabricating a stamper) includes the chemical plating process and the electroplating process as described above, there arises a problem that a waste water treatment equipment for such a plating processing is required but such an equipment can not be established at an arbitrary area due to the regulation of effluent.

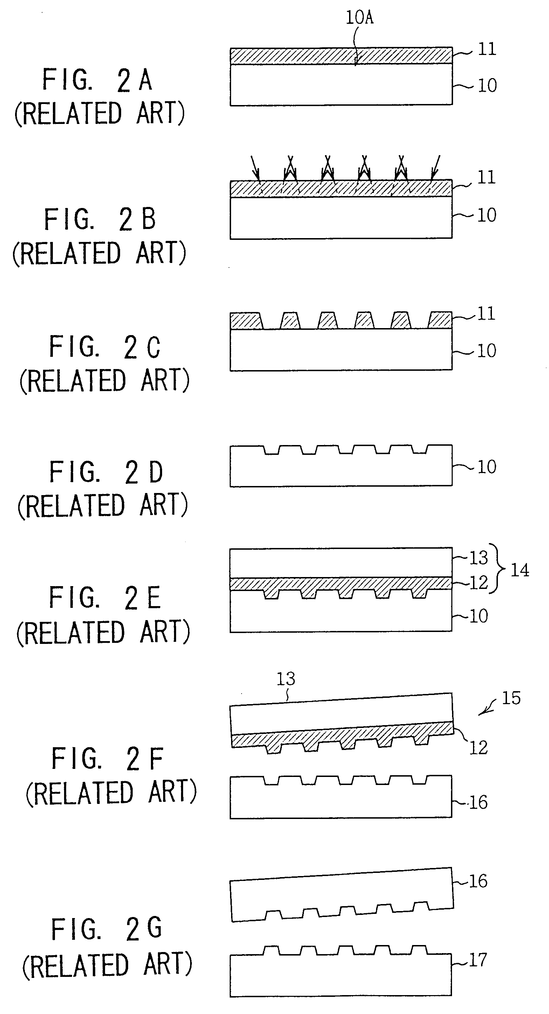

As another conventional method for fabricating a stamper for an optical disc, a method for employing etching process (hereinafter referred to as a second method for fabricating a stamper) as shown in Figs. 2A to 2G has been proposed (Japanese Patent Laid-Open Publication No. 4-184727).

Actually, according to the second method for fabricating a stamper, a positive-acting photoresist 11 is applied on a super mirror finished surface 10A of a glass plate 10 (Fig. 2A), and then the photoresist 11 is exposed with a laser beam hν in order to record a signal on the photoresist 11 (Fig. 2B). Thereafter, the photoresist 11 is developed to thereby form a concave/convex pattern of the photoresist 11 on the super mirror finished surface 10A of the glass plate 10 (Fig. 2C).

Then, the super mirror finished surface 10A of the glass plate 10 exposed through the concave/convex pattern are etched in order to process the super mirror finished surface 10A of the glass plate 10 in a concave/convex pattern same as that of the photoresist 11 (Fig. 2D). The photoresist 11 remaining on the super mirror finished surface 10A of the glass plate 10 is then removed.

Then, a conductive film layer 12 is formed on the super mirror finished surface 10A of the glass plate 10 by sputtering process, chemical plating process or the like. A plated layer 13 having a predetermined thickness is formed on the conductive film layer 12 by electroplating process or the like (Fig. 2E), and thereafter a metal master portion 14 composed of the conductive film layer 12 and the plated layer 13 is stripped off from the glass plate. Then, the photoresist 11 and so on adhered to the pit surface of the metal master portion 14 is washed away to form a metal master 15 (Fig. 2F).

Further, a mother 16 is formed from the metal master 15, and then a stamper 17 is formed from the mother 16 (Fig. 2G).

The second method for fabricating a stamper has the advantage of being able to obtain a stamper having the pit surface optically superior to that formed by the first method.

However, as described above, the second method for fabricating a stamper also requires the electroplating process when forming the stamper. Accordingly, there arises a problem that a waste water treatment equipment for the plating processing is required same as the first method for fabricating a stamper but such an equipment can not be established at an arbitrary area due to the regulation of effluent.

In this manner, the conventionally employed or proposed method for fabricating a stamper usually includes an electroplating process or a chemical plating process in a part of the fabricating a method.

This is because a positive-acting photoresist is usually used as the photoresists 2 and 11, and the parts of the photoresists 2 and 11 corresponding to the pits and/or grooves (hereinafter referred to as pit and/or groove corresponding parts) are exposed to record a signal on the photoresist. Accordingly, each of the pit and/or groove corresponding parts of the photoresists 2 and 11 after the development process become concave configuration with respect to remaining surface parts of the photoresist.

Actually, when the pit and/or groove corresponding parts has concave configuration, resin hardly flows into the concave parts in the process of transferring the signal to a disc from the stamper (for example, in the process of transferring the concave/convex pattern of the stamper to a disc by injection molding process or the like). As a result, the signal transfer (that is, the transfer of the concave/convex pattern) to a disc can not be performed sufficiently if each of the pit and/or groove corresponding parts do not have convex configurations. Thus, the conventional methods required a process of inverting the concave/convex pattern, for example, the process of forming a replica once or an odd number of times by employing such plating technique as described above.

For this reason, as to the requirement for the waste water treatment equipment etc., the conventionally employed or proposed method for fabricating a stamper has a problem that much time is required from the exposing process to the stamper completing process. Further, since the conventionally employed or proposed stamper fabricating a method requires operation of measuring and managing bath composition and impurities, etc. of an electroplating bath, there arises a problem that it is difficult to form a stamper easily and in a short time.

### SUMMARY OF THE INVENTION

In view of foregoing, an object of this invention is to provide a method for fabricating a stamper that is able to fabricate a stamper easily and in a short time.

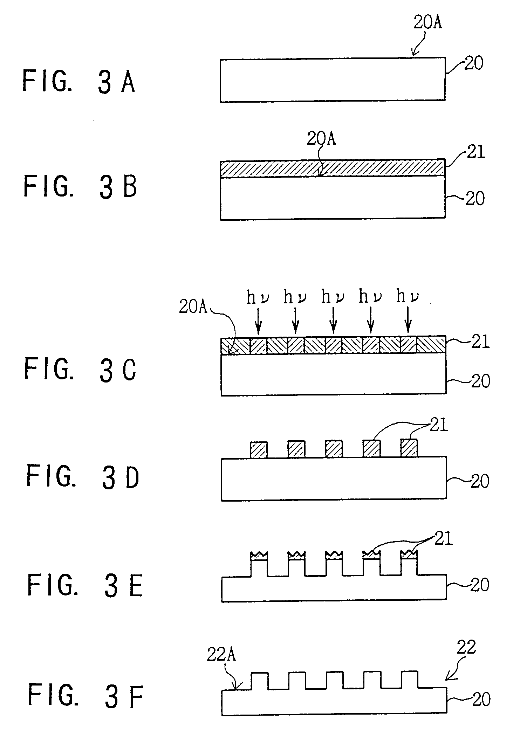

The foregoing object and other objects of the invention have been achieved by the provision of a method for fabricating a stamper, comprising the steps of: applying positive-acting photoresist 21 on one surface 20A of a substrate 20 with plate configuration shown in Figs. 3A to 3F; and exposing and developing the photoresist 21 with the pattern corresponding to a signal to be recorded, and thereby forming the concave/convex pattern composed of the photoresist 21 on one surface 20A of the substrate 20 to fabricate a stamper 22 serving as a mold at the time of molding an optical disc based on the concave/convex pattern; wherein the substrate 20 itself is processed to be used as the stamper 22.

Furthermore, the present invention provides the method for fabricating a stamper for serving as a mold when molding an optical disc, comprising: a first process of applying negative-acting photoresist 21 on a major surface 20A of a substrate 20 with plate configuration which is formed to be quite smooth; a second process of exposing and developing the photoresist 21 in accordance with the signal to be recorded, and thereby remaining only the parts corresponding to the pits and/or grooves of the photoresist 21 on the major surface 20A of the substrate 20 with the pattern in accordance with the signal; and a third process of etching the major surface 20A of the substrate 20 which exposes through the photoresist 21 remained on the major surface 20A of the substrate 20, and thereby forming the parts corresponding to the pits and/or grooves of the photoresist 21 on the major surface 20A of the substrate 20 in convex configuration.

Furthermore, in the second process of the present invention, the photoresist 21 is exposed by an i-ray.

Furthermore, in the present invention, a substrate whose major surface 20A has surface roughness of 8 [nm] or less is employed as the substrate 20.

The substrate 20 itself is processed to be used as the stamper 22, therefore the transfer process of the concave/convex pattern of the photoresist 21 formed on the substrate 20.

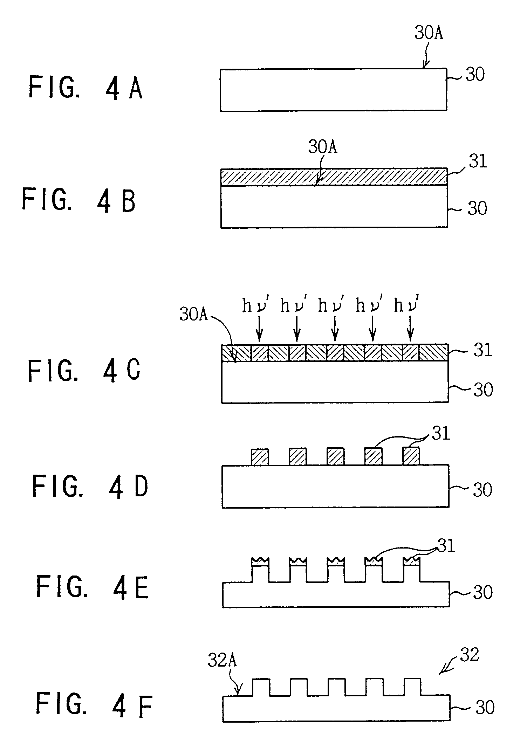

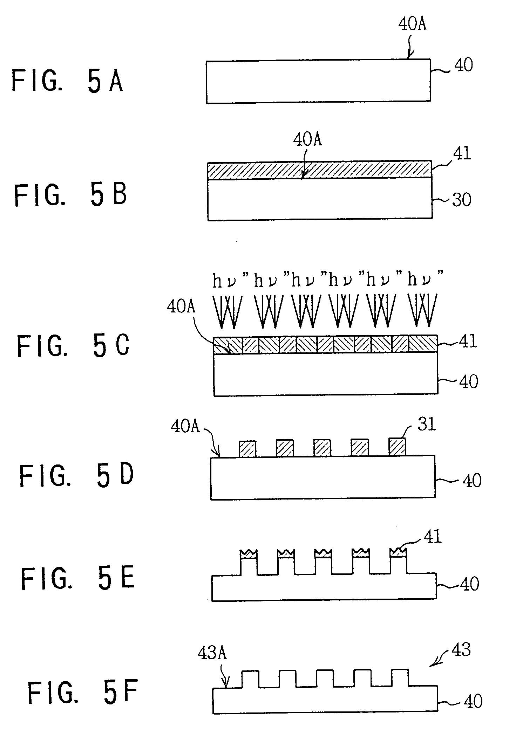

Furthermore, as shown in Figs. 4A to 4F, and 5A to 5F, the present invention provides the method for fabricating a stamper, comprising: a first process of applying positive-acting photoresist 31, 41 on a major surface 30A, 40A of a substrate 30, 40 with plate configuration which is formed to be quite smooth; a second process of converting the first data to be recorded in a specified pattern, then exposing and developing parts of the photoresist 31, 41 other than parts corresponding to pits and/or grooves of the photoresist 31, 41 in accordance with the second signal obtained by the conversion, and thereby remaining only the parts corresponding to the pits and/or grooves of the photoresist 31, 41 on the major surface 30A, 40A of the substrate 30, 40; and a third process of etching the major surface 30A, 40A of the substrate 30, 40 which exposes through the photoresist 31, 41 remained on the major surface 30A, 40A of the substrate 30, 40, and thereby forming each of parts of the substrate 30, 40 corresponding to the parts corresponding to the pits and/or grooves of the photoresist 31, 41 in convex configuration.

Furthermore, in the second process of the present invention, the photoresist 31, 41 is exposed by a g-ray.

Furthermore, in the present invention, a substrate whose major surface 30A, 40A has surface roughness of 8 [nm] or less is employed as the substrate 30, 40.

Since the major surface 30A, 40A of the substrate 30, 40 which exposes through the photoresist 31, 41 remained on the major surface 30A, 40A of the substrate 30, 40 is etched to thereby form the parts corresponding to the pits and/or grooves of the photoresist 31, 21 on the major surface 30A, 40A of the substrate 30, 20 in convex configuration, it is possible to eliminate plating process such as electroplating or chemical plating from the stamper fabricating procedure.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
Figs. 1A to 1F are schematic diagrams showing a conventional method for fabricating a stamper for an optical disc;
Figs. 2A to 2G are schematic diagrams showing the conventional method for fabricating a stamper for the optical disc;
Figs. 3A to 3F are schematic diagrams showing a method for fabricating a stamper for the optical disc according to the first embodiment;
Figs. 4A to 4F are schematic diagrams showing the method for fabricating a stamper for the optical disc according to the second embodiment; and
Figs. 5A to 5F are schematic diagrams showing the method the fabricating a stamper for the optical disc according to the third embodiment.

### DETAILED DESCRIPTION OF THE EMBODIMENT

Preferred embodiments of this invention will be described with reference to the accompanying drawings:

### (1) First Embodiment

Figs. 3A to 3F show a method for fabricating a stamper for an optical disc according to the present invention. A negative-acting photoresist 21 is applied on a super mirror finished surfaced 20A of a substrate 20 with plate configuration as shown in Fig. 3A (Fig. 3B), and then is exposed with a laser beam hν by a pattern corresponding to a signal to be recorded (Fig. 3C) to be developed (Fig. 3D).

Preferably, an i-ray is employed as a light source in this embodiment. Usually, the i-ray is the light with a wavelength of 365 [nm] that is radiated from a high pressure mercury lamp. In this case, a laser light being adapted to the photoresist for the i-ray may be employed as the light source such as argon laser having a major spectrum of 364 [nm], argon laser having a major spectrum of 351 [nm], a helium-cadmium laser having a major spectrum of 325 [nm].

In this case, as shown in Fig. 3D, after the developing process, a concave/convex pattern of the photoresist 21 remained only in its pit and/or groove corresponding parts is formed on the super mirror finished surface 20A of the substrate 20.

Then, as shown in Fig. 3E, the exposed parts of the super mirror finished surface 20A of the substrate 20 exposed through the photoresist 21 are etched to form the super mirror finished surface 20A in the concave/convex pattern same as that of the photoresist 21. Thereafter, the photoresist 21 remaining on the super mirror finished surface 20A of the substrate 20 is removed. Thus, as shown in Fig. 3F, a stamper 22 can be obtained that has on its major surface 22A a concave/convex pattern corresponding to a signal recorded on the photoresist 21 in the exposing process (Fig. 3C).

Concretely, the substrate 20 can be formed in the following manner. That is, silane coupling process is performed on a major surface of a glass plate (for example, soda glass or the like) that has been polished quite smoothly. Then, a conductive film is formed on the major surface of the glass plate by nickel plating process using hypophosphorous acid as reducing agent. The conductive film is made to have 0.5 [mm] thickness by electroplating process, then stripped off from the glass plate, and washed to thereby form the substrate.

The negative-acting photoresist 21 for the i-ray, for example, THMR-iN350 (trade name) manufactured by Tokyo Ohka Kogyo Co., Ltd. or the like is applied on the super mirror finished surface 20A of the thus formed substrate 20 with a predetermined thickness (about 300 [nm]).

Further, in the exposing process (Fig. 3C), 6" size of, for example, chrome mask is formed that is opened at parts of the pit and/or groove corresponding parts so as to correspond with the signal to be recorded. Then, the i-ray is irradiated on the photoresist 21 through the chrome mask to expose the photoresist 21, thereby recording the signal on the photoresist 21.

In this case, the chrome mask can be formed in the following manner. That is, the positive-acting photoresist such as V3 (trade name) manufactured by Tokyo Ohka Kogyo Co., Ltd., is applied on the low-reflecting type of chrome mask, exposed by using a exposure system for a recording disc such as WMC-3200 (trade name) manufactured by Sony Corporation. Then, the mask material is developed to form the chrome mask.

Further, in the developing process (Fig. 3D), after a designated PEB, the photoresist is developed by using developing solution for a photoresist, for example, NMD-3 (trade name) manufactured by Tokyo Ohka Kogyo Co., Ltd. or the like, thereby forming the concave/convex pattern of the photoresist on the super mirror finished surface 20A of the substrate 20. In the succeeding etching process (Fig. 3E), only the exposed parts of the super mirror finished surface 20A of the substrate 20 that have been exposed in the developing process is etched by a thickness of 100 [nm] by ion milling process. As a result, each of parts of the super mirror finished surface 20A of the substrate 20 corresponding to the parts of the photoresist 21 remained on the super mirror finished surface 20A is formed in convex configuration.

In the succeeding removing process of the photoresist 21, the photoresist 21 remained on the super mirror finished surface 20A of the substrate 20 is removed by using exfoliation liquid for photoresist, for example, exfoliation liquid-106 (trade name) manufactured by Tokyo Ohka Kogyo Co., Ltd. or the like, and then the substrate is washed. Thus, the stamper 22 shown in Fig. 3F is obtained.

Actually, the stamper 22 was replicated by using an optical disc molding machine DISC-M3 (trade name) manufactured by Sumitomo Heavy Industries, Ltd., and sequentially forming an aluminum reflection film and a protection film on the transparent substrate obtained by above replication so as to manufacture an optical disc. As a result of consideration, when its surface roughness have been changed by changing the polishing condition of the glass plate as the effect of the surface roughness of the super mirror finished surface 20A of the substrate 20 and error rate, e.g., of a compact disc for music have been measured, it came out that it could meet standard requirements if the surface roughness was 8 [nm].

As the construction described above, according to the method for fabricating a stamper of the present invention, since the negative-acting photoresist is employed as the photoresist 21 applied on the super mirror finished surface 20A of the substrate 20 so that the pit and/or groove corresponding parts of the photoresist 21 are exposed, after the development of the photoresist, only the pit and/or groove corresponding parts of the photoresist are remained on the super mirror finished surface 20A of the substrate 20 as the concave/convex pattern of the photoresist 21.

Accordingly, the present invention does not require a transfer process of the concave/convex pattern unlike the conventional first and second methods for fabricating a stamper, so that a time required from the exposing process to the stamper completion process can be shortened.

Further, since the present invention does not require the transfer process of the concave/convex pattern, an electroplating process or a chemical plating process can be eliminated in a fabricating procedure from the applying process of the photoresist 21 to the substrate 20 to the stamper 22 completing process. Accordingly, for example, when the substrate 20 is purchased as a material for fabricating the stamper from other factory or company, it is possible to completely eliminate any plating process from the optical disc fabricating procedure.

In this case, the waste water treatment equipment can be simplified to a large extent and a space required for disposition of waste water can also be decreased. Further, since the regulation of effluent or the like is relaxed to a large extent, the fabricating equipment of the optical disc can be newly or additionally established at ease.

Further, since an electroplating process or a chemical plating process can be eliminated from the stamper fabricating procedure, inferiority such as change in color at the time of an electroplating process can be eliminated. It is also possible to eliminate such an operation of measuring and managing bath composition and impurities, etc. of an electroplating bath.

Further, when a process of managing and inspecting a film thickness of the stamper 22 is performed in advance, yield of the disc can be improved and fabricating procedure thereof can be simplified.

Accordingly, as clear from the aforesaid description, the present invention is effective as technique for mass-producing optical discs (particularly, optical discs for recording).

Further, the negative-acting photoresist is used as the photoresist 21 for applying on the super mirror finished surface 20A of the substrate 20, and the photoresist 21 remains only the pit and/or groove corresponding part on the super mirror finished surface 20A when finishing developing process, so that equipments and apparatuses such as the exposure equipments and the signal system circuits (for example, the exposing device for CD (compact disc) DMC-1200 (manufactured by Sony Corporation, trade name) which includes both the exposure equipment and the signal system circuit, or the exposing device for a recording disc WMC-3200 (manufactured by Sony Corporation, trade name)) can be used.

According to the construction described above, after the negative-acting photoresist 21 is applied on the super mirror finished surface 20A of the substrate 20, the pit and/or groove corresponding parts of the photoresist 21 thereof are exposed and then developed to form the concave/convex pattern of the photoresist 21. Then, the super mirror finished surface 20A of the substrate 20 is etched to be formed to have the same concave/convex pattern as that of the photoresist 21, and thereafter the photoresist 21 is removed from the super mirror finished surface 20A of the substrate 20 to thereby form the stamper 22. Accordingly, since a plating process can be eliminated from the stamper fabricating procedure, it is possible to realize the method for fabricating a stamper that is able to fabricate the stamper for an optical disc easily in a short time.

In the embodiment described above, the silane coupling process is performed on a major surface of a glass plate that has been polished quite smoothly. Then, a conductive film is formed on the major surface of the glass plate by nickel plating process using hypophosphorous acid as reducing agent. The conductive film is made to have 0.5 [mm] thickness by electroplating process, then stripped off from the glass plate and washed, thereby the substrate 20 is formed in the manner. However, the present invention is not only limited to this, but the substrate can be formed by forming the super mirror finished surface on a metal plate or a ceramic plate by way of polishing or various etching processes.

Further, the embodiment described above, nickel is applied as the material of the substrate 20. However, the present invention is not only limited to this, but various materials which satisfy the intensity and flexibility for each method for forming an optical disc and the selectivity and equality for each etching process can be applied, such as iron, alminum, nickel, chrome, lead, copper, zinc, silicon, an alloy including these materials, and a stuff including oxide of these materials.

However, when selecting the materials having high reflection factor, processing a surface not to fog when exposing, for example, an oxide film forming by surface oxidation and vapor phase plating or a forming of low-reflecting film of different materials are needed.

Further, the embodiment described above, the negative-acting photoresist for the i-ray is applied on the super mirror finished surface 20A of the substrate 20 with a thickness of 300 [nm]. However, the present invention is not only limited to this, but the other kinds of negative-acting photoresist 21 can be used and the thickness of the photoresist 21 for applying on the super mirror finished surface 20A of the substrate 20 can be changeable.

In this case, as the kind of photoresist 21, a negative-acting resist having the resolving power corresponding to each format of the optical disc is effective. The thickness of 100 to 1,000 [nm] is suitable for the photoresist 21 for applying on the super mirror finished surface 20A, but the optimal value differs depending on the selection of etching process.

Further, in the embodiment described above, ion milling process is applied to etching method. However, the present invention is not only limited to this, but it is possible to apply dry etching process such as RIE (reactive ion etching), electrolytic etching process, wet etching process such as chemical etching, or the combination of dry and wet etching processes.

In the combination of dry and wet etching processes, after finishing RIE process, extremely thin chemical etching can be processed. In fact, when making the experiment, the combination of dry and wet etching processes have been optimal out of the aforesaid processes.

Further, in the embodiment described above, when exposing the photoresist 21 applied on the super mirror finished surface 20A of the substrate 20, the chrome mask being opened at parts corresponding to the pit and/or groove is used. However, the present invention is not only limited to this, but direct etching can be applied by which the pit and/or groove corresponding part of the photoresist 21 applied on the super mirror surface 20A of the substrate 20 by argon laser having wavelength of 351 [nm] or 364 [nm] or the other laser beam.

Incidentally, as the selection of exposing method, for a reproduce-only medium such as MD (mini disc), the direct etching by laser beam is more suitable than the mask exposing which requires time and cost for forming mask that are produced in multikinds of softwares but each by small quantity. On the other hand, since an optical disc for recording such as a recordable MD which height of pit is same as that of groove is mass-produced for same kind of software, it is suitable to apply the mask exposing whose exposing time is shorter.

According to the present invention as described above, in the method for fabricating a stamper by applying photoresist on a major surface of the plate substrate, forming the concave/convex pattern on the major surface of the substrate by exposing and developing the photoresist with the pattern corresponding to the signal to be recorded, and fabricating the stamper serving as a mold at the time of molding an optical disc based on the concave/convex pattern, since the substrate itself is processed to be used as a stamper, the process of transferring the concave/convex pattern of the photoresist formed on the substrate can be omitted. Therefore, the method for fabricating a stamper can be realized in which the stamper can be fabricated easily and in a short time.

### (2) Second Embodiment

Figs. 4A to 4F show a method for fabricating a stamper for an optical disc according to the second embodiment of the present invention. A positive-acting photoresist 31 is applied on a super mirror finished surfaced 30A of a substrate 30 with plate configuration as shown in Fig. 4A (Fig. 4B), and then the parts other than the pit and/or groove corresponding parts of the photoresist 31 is exposed with a g-ray hν' (Fig. 4C) to be developed (Fig. 4D).

Preferably, the g-ray is employed as a light source in this embodiment. Usually, the g-ray is the light with a wavelength of 436 [nm] that is radiated from a high pressure mercury lamp. In this case, a laser light being adapted to the photoresist for the g-ray may be employed as the light source such as argon laser having a major spectrum of 457 [nm], a helium-cadmium laser having a major spectrum of 442 [nm], and krypton gas laser having a major spectrum of 413 [nm].

In this case, as shown in Fig. 4D, after the developing process, a concave/convex pattern of the photoresist 31 remained only in its pit and/or groove corresponding parts is formed on the super mirror finished surface 30A of the substrate 30.

Then, as shown in Fig. 4E, the exposed parts of the super mirror finished surface 30A of the substrate 30 exposed through the photoresist 31 are etched to form the super mirror finished surface 30A in the concave/convex pattern same as that of the photoresist 31. Thereafter, the photoresist 31 remaining on the super mirror finished surface 30A of the substrate 30 is removed. Thus, as shown in Fig. 4F, a stamper 32 can be obtained that has on its major surface 32A a concave/convex pattern corresponding to a signal recorded on the photoresist 31 in the exposing process (Fig. 4C).

Concretely, the substrate 30 can be formed in the following manner. That is, silane coupling process is performed on a major surface of a glass plate (for example, soda glass or the like) that has been polished quite smoothly. Then, a conductive film is formed on the major surface of the glass plate by nickel plating process using hypophosphorous acid as reducing agent. The conductive film is made to have 0.5 [mm] thickness by electroplating process, then stripped off from the glass plate, and washed to thereby form the substrate.

The positive-acting photoresist 31, for example, TSMR-V90 (trade name) manufactured by Tokyo Ohka Kogyo Co., Ltd. or the like is applied on the super mirror finished surface 30A of the thus formed substrate 30 with a predetermined thickness (about 500 [nm]).

Further, in the exposing process (Fig. 4C), a chrome mask is prepared that is opened at parts of the pit and/or groove corresponding parts so as to correspond with the signal to be recorded. Then, the g-ray is irradiated on the photoresist 31 through the chrome mask to expose the photoresist 31, thereby recording the signal on the photoresist 31.

In this case, at first, signal information to be recorded is transformed into data corresponding to X and Y coordinate axes. Then, the chrome mask is formed by being exposed with the converted data by an electron beam exposure system employed in a semiconductor manufacturing process, and being developed.

Further, in the developing process (Fig. 4D), after a designated PEB, the photoresist is developed by using developing solution for a photoresist, for example, NMD-3 (trade name) manufactured by Tokyo Ohka Kogyo Co., Ltd. or the like, thereby forming the concave/convex pattern of the photoresist on the super mirror finished surface 30A of the substrate 30. In the succeeding etching process (Fig. 4E), only the exposed parts of the super mirror finished surface 30A of the substrate 30 that have been exposed in the developing process is etched by a thickness of 100 [nm] by ion milling process. As a result, each of parts of the super mirror finished surface 30A of the substrate 30 corresponding to the parts of the photoresist 31 remained on the super mirror finished surface 30A is formed in convex configuration.

In the succeeding removing process of the photoresist 31, the photoresist 31 remained on the super mirror finished surface 30A of the substrate 30 is removed by using exfoliation liquid for photoresist, for example, exfoliation liquid-106 (trade name) manufactured by Tokyo Ohka Kogyo Co., Ltd. or the like, and then the substrate is washed. Thus, the stamper 32 shown in Fig. 4F can be obtained.

Actually by the experiment, the stamper 32 is replicated by using an optical disc molding machine DISC-M3 (trade name) manufactured by Sumitomo Heavy Industries, Ltd., and an aluminum reflection film and a protection film are sequentially formed on the transparent substrate obtained by above replication, so that there has been obtained an optical disc that can be used sufficiently in practice.

As the construction described above, according to the method for fabricating a stamper of the present invention, since the positive-acting photoresist is employed as the photoresist 31 applied on the super mirror finished surface 30A of the substrate 30 so that the parts of the photoresist 31 other than the pit and/or groove corresponding parts thereof are exposed, after the development of the photoresist, only the pit and/or groove corresponding parts of the photoresist are remained on the super mirror finished surface 30A of the substrate 30 as the concave/convex pattern of the photoresist 31.

Accordingly, the present invention does not require a transfer process of the concave/convex pattern unlike the conventional first and second methods for fabricating a stamper, so that a time required from the exposing process to the stamper completion process can be shortened.

Further, since the present invention does not require the transfer process of the concave/convex pattern, an electroplating process or a chemical plating process can be eliminated in a fabricating procedure from the applying process of the photoresist 31 to the substrate 30 to the stamper 32 completing process. Accordingly, for example, when the substrate 30 is purchased as a material for fabricating the stamper from other factory or company, it is possible to completely eliminate any plating process from the optical disc fabricating procedure.

In this case, the waste water treatment equipment can be simplified to a large extent and a space required for disposition of waste water can also be decreased. Further, since the regulation of effluent or the like is relaxed to a large extent, the fabricating equipment of the optical disc can be newly or additionally established at ease.

Further, since an electroplating process or a chemical plating process can be eliminated from the stamper fabricating procedure, inferiority such as change in color at the time of an electroplating process can be eliminated. It is also possible to eliminate such an operation of measuring and managing bath composition and impurities etc. of an electroplating bath.

Further, when a process of managing and inspecting a film thickness of the stamper 32 is performed in advance, yield of the disc can be improved and fabricating procedure thereof can be simplified.

Accordingly, as clear from the aforesaid description, the present invention is effective as technique for mass-producing optical discs (particularly, optical discs for recording).

Further, since the stamper for an optical disc is fabricated in the aforesaid procedure, the stamper is practically adapted to various sorts of optical discs by preparing a signal generation formatter dedicated depending on every kind of optical disc specification (for example, recordable MD (mini disc), etc.). This formatter can also be employed at the time of exposing the mask.

Actually, when this formatter is realized, the reproducibility and manufacturing margin of the discs can be improved at the time of practically using the stamper fabricating procedure according to the present invention.

According to the construction described above, after the positive-acting photoresist 31 is applied on the super mirror finished surface 30A of the substrate 30, parts of the photoresist 31 except for the pit and/or groove corresponding parts are exposed and then developed to form the concave/convex pattern of the photoresist 31. Then, the super mirror finished surface 30A of the substrate 30 is etched to be formed to have the same concave/convex pattern as that of the photoresist 31, and thereafter the photoresist 31 is removed from the super mirror finished surface 30A of the substrate 30 to thereby form the stamper 32. Accordingly, since a plating process can be eliminated from the stamper fabricating procedure, it is possible to realize the method for fabricating a stamper that is able to fabricate the stamper for an optical disc easily in a short time.

### (3) Third Embodiment

Figs. 5A to 5F show a stamper fabricating procedure according to a third embodiment of the present invention. The method for fabricating a stamper of the third embodiment is substantially same as that of the second embodiment except for a point that, in the third embodiment, parts of a photoresist 41 applied on a substrate 40 other than pit and/or groove corresponding parts thereof are exposed by being directly drawn by laser light.

In other word, according to the method for fabricating a stamper of the third embodiment, after the positive-acting photoresist 41 is applied on a super mirror finished surface 40A of the substrate 40 shown in Fig. 5A (Fig. 5B), the parts of the photoresist 41 other than the pit and/or groove corresponding parts thereof are exposed by being directly drawn by laser light hν'' (Fig. 5C) and then developed.

In this case, after the developing process, the photoresist 41 is remained only in its parts corresponding to the pit and/or groove corresponding parts on the super mirror finished surface 40A of the substrate 40 to thereby form a concave/convex pattern as shown in Fig. 5D.

Then, the parts of the super mirror finished surface 40A of the substrate 40 exposed through the photoresist 41 are etched to thereby form the super mirror finished surface 40A of the substrate 40 in the concave/convex pattern same as that of the photoresist 41 (Fig. 5E). Thereafter, the photoresist 41 remaining on the super mirror finished surface 40A of the substrate 40 is removed. Thus, a stamper 43 can be obtained that has on its major surface 43A a concave/convex pattern corresponding to a signal recorded on the photoresist 41 in the exposing process (Fig. 5C).

Concretely, the substrate 40 can be formed in a manner that a major surface of a conventional glass plate (for example, aluminosilicate glass plate etc.) having been polished for use of an optical disc is vapor-phase-plated with chrome by sputtering process to form a plated layer having an average thickness of 1 [nm] on the glass plate.

In the applying process of the photoresist 41 (Fig. 5B), the positive-acting photoresist 41, for example, TSMR-8900 manufactured by Tokyo Ohka Kogyo Co., Ltd. or the like is applied so as to have a thickness of 300 [nm] on the vapor-phase-plated layer forming the super mirror finished surface 40A of the thus formed substrate 40.

Further, in the exposure process (Fig. 5C), the photoresist 41 applied on the super mirror finished surface 40A of the substrate 40 is exposed with a pit and/or groove negative pattern of a predetermined frequency by employing a He-Cd laser, an acousto-optic element for modulating light, a movable optical system having an objective lens with a vignetting factor of 0.9, a turn table that outputs a rotational synchronous signal and rotates with a predetermined period and is capable of fixing the substrate 40, a function generator for outputting a signal in synchronous with the rotational synchronous signal, a control circuit for counting the rotational synchronous signal and timely selecting the output signal from the function generator, and a control means (for example, a personal computer) for controlling these elements.

In the succeeding developing process (Fig. 5D), the photoresist 41 applied on the substrate 40 is developed by using developing solution for a photoresist, for example, NMD-3 (trade name) manufactured by Tokyo Ohka Kogyo Co., Ltd. or the like. As a result, only the pit and/or groove corresponding parts of the photoresist are remained on the super mirror finished surfaced 40A of the substrate 40, so that the concave/convex pattern of the photoresist corresponding to the recorded signal is formed.

In the etching process (Fig. 5E), deep UV (ultraviolet light) is irradiated on the photoresist 41 remained on the super mirror finished surface 40A of the substrate 40 to thereby subject the photoresist 41 to a processing of improving heat resistance thereof. Then, the parts of the super mirror finished surface 40A of the substrate 40 exposed through the concave/convex pattern of the photoresist 41 are etched by RIE process by employing CHF₃ gas as etching gas. As a result, each of the parts of the super mirror finished surface 40A of the substrate 40 corresponding to the parts of the photoresist 41 remained on the super mirror finished surface 40A is formed in convex configuration.

The etched surface of the super mirror finished surface is further etched by a wet and weak etchant, for example, aqueous solution containing 2 [%] hexafluorosilicic acid (H₂SiF₂) or the like to thereby smooth the etched surface.

In the succeeding removing process of the remaining photoresist, the photoresist 41 remained on the super mirror finished surface 40A of the substrate 40 is removed by using exfoliation liquid for photoresist, for example, the exfoliation liquid-106 (trade name) manufactured by Tokyo Ohka Kogyo Co., Ltd. or the like, and then the substrate is washed. Thus, the stamper 43 formed by the glass plate shown in Fig. 5F is obtained.

In the aforesaid exposing process (Fig. 5C), the substrate 40 is exposed by an exposing device for a recording disc WMC-3200 (trade name) manufactured by Sony Corporation under the condition that the rotation speed is 630 [rpm], an amount of exposure is 0.15 [mJ/m] and a track pitch is 0.2 [µm] in a manner that the major surface of the substrate is exposed along a circular line with a radius of 30 [mm] thereon with a signal of a frequency of 1 [MHz] synchronized with the rotation of the turn table and a continuous signal alternately each for four rounds. Thus, a negative pattern of pits is exposed such that each pit has an apparent track pitch of 1.6 [µm] and an apparent length of about 1 [µm]. When a disc is formed by using the thus formed stamper 43 by 2P technique (that is, a transfer process using UV-curing acrylic resin), the influence of the surface roughness of the super mirror finished surface side of the glass plate to the disc has been investigated in the following manner. That is, when an error rate or the like of CD (compact disc) for music is measured as to various values of the surface roughness by changing the polishing condition of the glass plate, for example, it has been found that the compact disc meets the standard requirement even when the surface roughness is 8 [nm]. In this case, the values of the surface roughness are obtained by measuring that of the one surface 40A of the glass plate which is not subjected to the applying of the photoresist 41 yet.

The second embodiment performs the exposing process (Fig. 4C) by using the chrome mask, while the third embodiment performs the exposing process (Fig. 5C) by directly drawing the pattern by using the laser light hν''. Rather than the exposing method using the mask, the directly drawing method using the laser light is suitable for discs such as MD exclusively designed for reproduction or the like that are produced in multikinds of softwares but each by small quantity. This is because the exposing method using the mask requires much time and cost for preparing the mask. In contrast, the exposing method using the mask is suitable for an optical disc for recording such as recordable MD or the like in which a height of the pit is same as that of the groove. This is because such an optical disc for recoding is mass-produced for each kind of software and the exposing method using the mask is short in exposing time.

According to the construction described above, in the method for fabricating a stamper of the third embodiment, after the positive-acting photoresist 41 is applied on the super mirror finished surface 40A of the substrate 40, the parts of the photoresist 41 other than the pit and/or groove corresponding parts thereof are exposed by being directly drawn by laser light hν'' in accordance with the signal to be recorded and then developed, thereby forming the concave/convex pattern formed by the pit and/or groove corresponding parts of the photoresist 41 on the super mirror finished surface 40A of the substrate 40. Then, the parts of the super mirror finished surface 40A of the substrate 40 is formed in the concave/convex pattern same as that of the photoresist 41 by the etching process. Thereafter, the photoresist 41 remaining on the super mirror finished surface 40A of the substrate 40 is removed to thereby form the stamper 43. Accordingly, since the fabricating procedure from the applying process of the photoresist 41 on the super mirror finished surface 40A of the substrate 40 to the stamper 43 completing process can be performed without using any plating process, it is possible to realize the method for fabricating a stamper which can fabricate the stamper easily and in short time.

### (4) Other Embodiments

While, in the second and third embodiments, the substrates 30 and 40 are formed by replicating from the glass pate and formed from the glass plate itself, respectively. However, the present invention is not only limited to this, but, for example, each of the substrates 30 and 40 can be formed such that the major surface of a metal or ceramic plate is polished by polishing process or the like or etched by one of various kinds of etching techniques to form a super mirror finished surface 30A and 40A thereon.

In this case, since each substrate 30 and 40 serves as a mold for molding the optical disc, the substrate desirably has a thickness same as that of widely used optical disc, that is, 0.25 [mm] or more in view of the strength thereof. Further, in view of the thermal transmission at the time of molding, the thickness of the substrate is desirably 2 [mm] or less. Furthermore, the substrate is required to be formed sufficiently by taking account of the distribution of film thickness, degree of parallelization, flatness of the substrate or the like so as to expose it with light uniformly.

Further, in the second embodiment, nickel is employed as the material of the substrate 30. However, the present invention is not only limited to this, but such material can be employed that satisfies the strength and flexibility required depending on the molding method of an optical disc and satisfies the selectivity and uniformity required depending on the etching method. That is, for example, iron, aluminum, nickel, chrome, lead, copper, zinc or silicon, or an alloy containing some of them, or material containing oxide formed by some of them, or other sorts of material can be employed.

However, when material with a high reflectivity is selected as the material of the substrate, the substrate is required to be subjected to a surface processing so that the surface of the substrate would not be foggy at the time of exposing process. That is, it is required to form, for example, an oxide film on the surface of the substrate by surface oxidization or vapor phase plating, or to form a film with a low reflectivity on the surface of the substrate by different sort of material.

Further, in the second embodiment, the positive-acting photoresist 31 for the g-ray is applied on the super mirror finished surface 30A of the substrate 30 with a thickness of 500 [nm]. However, the present invention is not only limited to this, but so far as the positive-acting photoresist is employed as the photoresist 31 and, at the time of exposing, the parts of the photoresist other than the pit and/or groove corresponding parts thereof are exposed in accordance with the signal to be recorded, the sort of the photoresist 31 can be one other than that of the second embodiment and the thickness of the photoresist 31 applied on the super mirror finished surface 30A of the substrate 30 can be a value other than that of the second embodiment.

In this case, a positive-acting photoresist having a resoluting power depending on the format of an optical disc is effective as another type of the photoresist 31. Further, a suitable value of the thickness of the photoresist 31 applied on the super mirror finished surface 30A of the substrate 30 is in a range of 100 to 1000 [nm], but the optimum value thereof varies depending on the etching method.

Further, in the second and third embodiments of the present invention, ion milling process and RIE process are employed as the etching process, respectively. However, the present invention is not only limited to this, but wet etching process such as electrolytic etching or a combination of dray etching process such as RIE process and wet etching process can be employed.

When the combination of dry etching process and wet etching process is employed, after the etching process of reactive ion etching, chemical etching may be performed so as to etch away quite slightly. In fact, according to the investigation, it has been found that the combination of dry etching process and wet etching process is most suitable among the aforesaid etching methods.

In the case of etching process, when an adhesion force between the substrate 30 and 40 and the photoresist 31 and 41 are weak, the following surface processing of the substrate before the etching process is effective. That is, coupling process using coupling agent such as silane or titanium, HMDS, vapor phase plating using chrome or the like, or surface improving process using deep UV, or the like can be used as the surface processing.

As described above, according to the present invention, a stamper is fabricated in a manner that positive-acting photoresist is applied on the major surface of the substrate which is formed to be quite smooth, the first data to be recorded is converted into the second data in accordance with the predetermined pattern, the parts of the photoresist other than the pit and/or groove corresponding parts of thereof are exposed in accordance with the second data and then developed to remain only the pit and/or groove corresponding parts of the photoresist on the major surface of the substrate, and thereafter the major surface of the substrate exposed through the photoresist is etched to form each of parts of the substrate corresponding to the pit and/or groove corresponding parts of the photoresist in convex configuration. Accordingly, since a plating process such as electroplating or chemical plating can be eliminated from the stamper fabricating procedure, it is possible to realize the method for fabricating a stamper which is able to prepare a stamper easily in a short time.

While there has been described in connection with the preferred embodiments of the invention, it will be obvious to those skilled in the art that various changes and modifications may be aimed, therefore, to cover in the appended claims all such changes and modifications as fall within the true spirit and scope of the invention.

## Claims

1. A method for fabricating a stamper for applying a photoresist on a major surface of a substrate with plate configuration, exposing and developing said photoresist with the pattern corresponding to a signal to be recorded to form a concave/convex pattern composed of said photoresist on said major surface of said substrate, and fabricating a stamper serving as a mold at the time of molding an optical disc based on said concave/convex pattern, wherein said substrate itself is processed to be used as a stamper.

2. A method for fabricating a stamper for serving as a mold when molding an optical disc, comprising:
a first process of applying negative-acting photoresist on a major surface of a substrate with plate configuration which is formed to be quite smooth;
a second process of exposing and developing parts of said photoresist other than parts corresponding to pits and/or grooves of said photoresist in accordance with a signal to be recorded, and remaining only said parts corresponding to pits and/or grooves of said photoresist on said major surface of said substrate; and
a third process of etching said major surface of said substrate which exposes through said photoresist remained on said major surface of said substrate, and forming each of parts of said substrate corresponding to said parts corresponding to the pits and/or grooves of said photoresist in convex configuration.

3. The method for fabricating a stamper according to claim 2, wherein a light source having a major spectrum of 365 [nm] or less of wavelength is employed to expose said photoresist in said second process.

4. The method for fabricating a stamper according to claim 2, wherein a substrate of whose major surface has surface roughness of 8 [nm] or less is employed as said substrate.

5. A method for fabricating a stamper for serving as a mold when molding an optical disc, comprising:
a first process of applying positive-acting photoresist on a major surface of a substrate with plate configuration which is formed to be quite smooth;
a second process of converting first data to be recorded with a predetermined pattern, exposing and developing parts of said photoresist other than parts corresponding to pits and/or grooves of said photoresist in accordance with second data obtained by said conversion, and remaining only said parts corresponding to pits and/or grooves of said photoresist on said major surface of said substrate; and
a third process of etching said major surface of said substrate which exposes through said photoresist remained on said major surface of said substrate, and forming each of parts of said substrate corresponding to said parts corresponding to the pits and/or grooves of said photoresist in convex configuration.

6. The method for fabricating a scamper according to claim 5, wherein a substrate of whose major surface has surface roughness of 8 [nm] or less is employed as said substrate.

7. The method for fabricating a scamper according to claim 5, wherein a light source having a major spectrum of 413 [nm] or more of wavelength is employed to expose said photoresist in said second process.
